# EUROPÄISCHE PATENTSCHRIFT

(11) **EP 1 762 665 B1**
(45) Veröffentlichungstag und Bekanntmachung des Hinweises auf die Patenterteilung: **06.08.2014**
(21) Anmeldenummer: 06450121.6
(22) Anmeldetag: 06.09.2006
(51) Int. Cl.: E04C 2/38

(54) **Wand- oder Deckenkonstruktion in Trockenbauweise**
Wall or roof construction for dry construction
Paroi ou construction de toit en construction à sec

(30) Priorität: 12.09.2005 AT 14972005
(43) Veröffentlichungstag der Anmeldung: 14.03.2007
(73) Patentinhaber: Knapp, Johann, 2324 Rannersdorf bei Schwechat (AT)
(72) Erfinder: Knapp, Johann, 2324 Rannersdorf bei Schwechat (AT); Jelinek, Ernst, 2391 Kaltenleutgeben (AT)
(74) Vertreter: Rippel, Andreas

(56) Entgegenhaltungen:
- AT-B- 403 936
- DE-A- 4 225 945
- DE-U-202004 002 127
- DE-U1- 7 723 097

## Beschreibung

Die Erfindung bezieht sich auf eine Wand- oder Deckenkonstruktion in Trockenbauweise, entsprechend dem Oberbegriff des Anspruches 1.

Eine Trockenbauweise hat den wesentlichen Vorteil eines verhältnismäßig raschen Baufortschrittes bei wenig Schmutzanfall. Nachteilig kann sein, dass bei den bekannten Trockenbauweisen die hergestellten Wand- oder Deckenkonstruktionen praktisch keine Wärmespeicherfähigkeit besitzen.

Die Wärmespeicherfähigkeit von Bauteilen kann jedoch für das Wohlempfinden der Bewohner und Nutzer von Räumen eine große Bedeutung haben. Außen liegende Wärmedämmschichten und innen liegende speicherfähige Schichten wirken sich in der Regel günstig aus.

In der AT 403 936 ist ein Wandelement zur Errichtung von Gebäuden beschrieben, das einen Tragrahmen besitzt, der beidseitig mit Flachpreßspanplatten verkleidet ist. In dem Raum zwischen den Flachpreßspanplatten ist auf der einen Flachpreßspanplatte aufliegend eine Lage aus Mineralwolle vorgesehen, die dünner ist als der Abstand zwischen den Flachpreßspanplatten, so dass sich ein Luftraum bildet. An der in der Gebrauchslage des Wandelementes rauminnenseitig angeordneten Flachpreßspanplatte ist eine Platte aus porösem Wärmespeichermaterial und auf dieser eine Gipskartonplatte angebracht. An der in der Gebrauchslage außenseitig liegenden Flachpreßspanplatte ist als Wärmeisolierung eine Hartschaumstoffplatte über einen Elastikkleber aufgeklebt, die außenseitig einen Putz trägt.

Vorteil der bekannten Lösung soll unter anderem sein, dass die verschiedenen Installationen in einer dicken, leicht zu bearbeitenden Wandschicht, nämlich der Lage aus wärmespeicherndem Werkstoff, verlegt werden können. Allerdings ist noch immer ein beträchtlicher Aufwand für die Montage einer Heizung oder Kühlung erforderlich.

Die Erfindung hat es sich zum Ziel gesetzt, eine Wand- oder Deckenkonstruktion in Trockenbauweise zu schaffen, bei der die Montage einer Heizung oder Kühlung einfacher ist.

Erreicht wird dies dadurch, dass die Elemente aus wärmespeicherndem Material Nuten zum Einlegen von insbesondere flexiblen Rohren für den Durchfluß eines Heiz- oder Kühlmediums aufweisen.

Bei einer solchen Ausführungsform kann die Wand oder Decke mit den Ständern oder Trägem und den daran befestigten Steinen vorerst hergestellt werden und anschließend kann der Installateur die Rohre einlegen, miteinander verbinden sowie an das Heiz- oder Kühlaggregat anschließen. Es ist dann nur mehr die Verkleidung mit den Gipskartonplatten oder dergleichen herzustellen.

Aus der DE-U-20 2004 002 127 ist ein beheizbarer oder kühlbarer Bodenaufbau bekannt, der einen Bodenbelag und mit Rinnen versehene Formsteine aufweist, wobei mindestens in einigen der Rinnen Rohre eingelegt sind.

Es gibt jedoch keinen Hinweis, der auf die erfindungsgemäße Konstruktion hinweisen würde.

Damit die flexiblen Rohre von einem Stein zu einem der danebenliegenden Steine mit etwa parallel liegenden Nuten geführt werden können, besitzen die Steine nach einem weiteren Erfindungsmerkmal an ihren Begrenzungskanten je eine Stufe, wobei die Höhe der Stufen etwa der Tiefe der Nuten entspricht. Die von einem Stein zum benachbarten Stein geführten Rohre springen daher nicht aus der Hauptebene der Steine hervor.

Weitere Merkmale der Erfindung sind in den Unteransprüchen gekennzeichnet.

Nachstehend ist die Erfindung anhand von in den Zeichnungen dargestellten Ausführungsbeispielen näher beschrieben, ohne auf diese Beispiele beschränkt zu sein.

Dabei zeigen:
- Fig. 1: einen Schnitt durch eine erfindungsgemäß ausgebildete Deckenkonstruktion;
- Fig. 2: den unteren Teil einer Wandkonstruktion nach der Erfindung;
- Fig. 3: den Anschluß zweier senkrecht zueinander verlaufenden Wandkonstruktionen;
- Fig. 4: eine Draufsicht auf nebeneinander liegende verschiedene Steine vor ihrem Anschluß;
- Fig. 5: einen Schnitt der Steine nach Fig. 4;
- Fig. 6: eine Draufsicht auf einen Revisionsstein;
- Fig. 7: eine Seitenansicht auf den Revisionsstein nach Fig. 6.

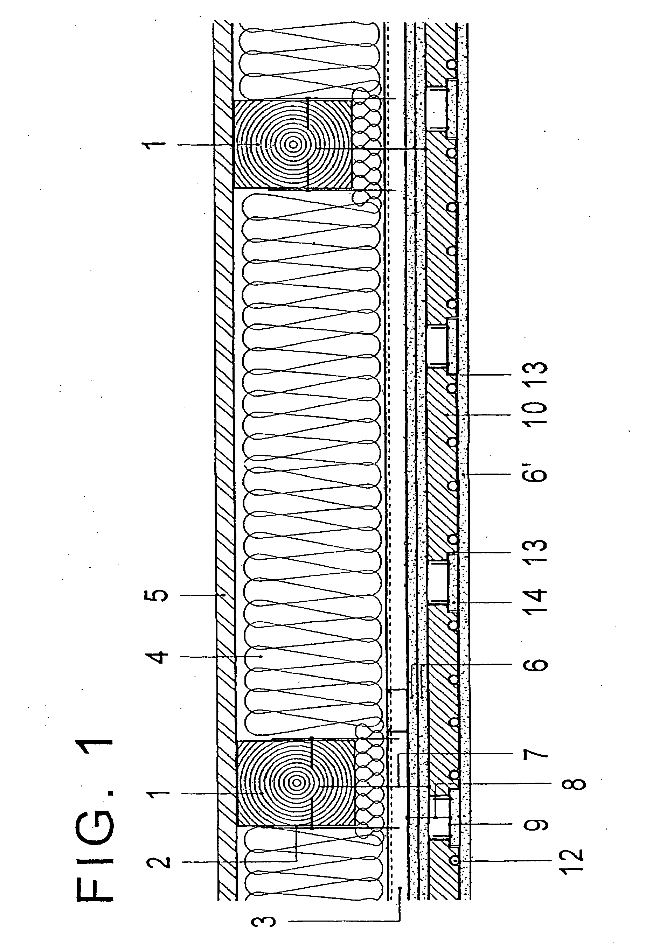

Gemäß Fig. 1 sind an Sparren 1 über Ankerhänger 2 Träger 3, sogenannte CD-Profile, aufgehängt. Zwischen den Trägern 3 und der Dachdeckung 5 ist eine Wärmedämmung 4 eingelegt. An den Trägern 3 sind zwei Gipskartonplatten 6 befestigt. Im gezeigten Ausführungsbeispiel ist noch eine zusätzliche Sicherungsverschraubung 7 angeordnet.

Über eine Nietverbindung 8 sind Träger 9, im Beispiel wieder CD-Profile, aufgehängt. Diese tragen über eingehakte abgewinkelte Halteprofile Steine 10. Die Steine 10 bestehen aus wärmespeicherndem Material. Gipskartonplatten 6' decken die Steine 10 ab.

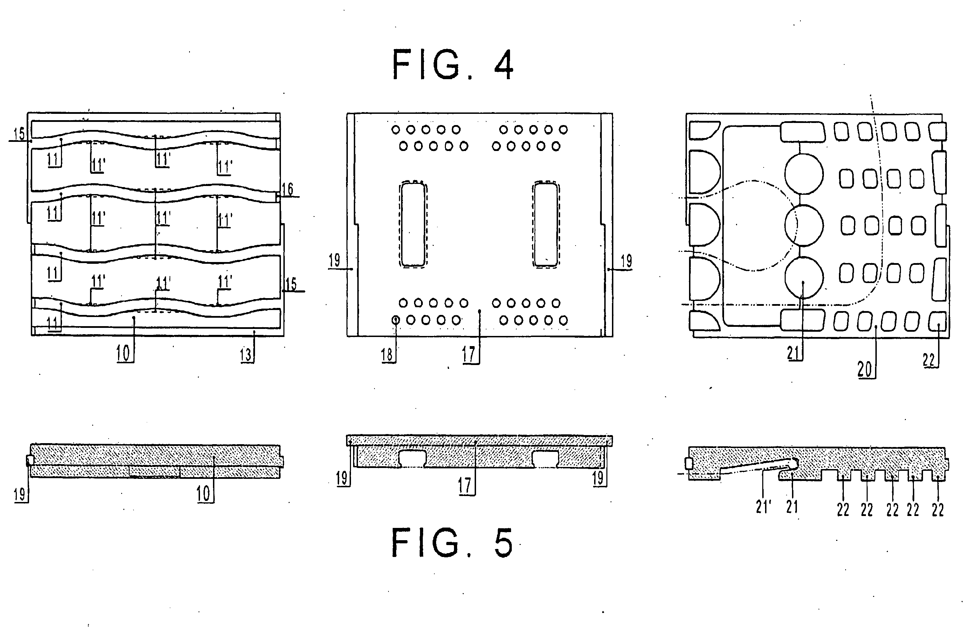

Ein solcher Stein 10, wie er in Fig. 4 in Draufsicht dargestellt ist, besitzt Nuten 11, die im Ausführungsbeispiel wellenförmig verlaufen. In die Nuten 11 können flexible Rohre 12 für den Durchfluß eines Heiz- oder Kühlmediums eingelegt werden. Wie strichliert dargestellt und mit 11' bezeichnet ist, sind die Nuten 11 an den jeweiligen Scheitelpunkten der Wellen hinterschnitten. Dadurch wird ein Herausspringen der flexiblen Rohre 12 verhindert.

Die Steine 10 besitzen an ihren Begrenzungskanten Stufen 13, deren Höhe im wesentlichen der Tiefe der Nuten 11 entspricht. Dadurch ist es möglich, flexible Rohre 12 von einem Stein 10 zum benachbarten Stein 10 zu führen, ohne dass diese Rohre aus der unteren Hauptebene der Steine 10 vorspringen. Dort, wo keine Rohre 12 in dem Zwischenraum zwischen zwei Steinen 10 liegen, ist ein Streifen 14 aus Gipskarton eingelegt.

Um hintereinander liegende Steine verbinden zu können, besitzt jeder Stein einen jeweils über die halbe Steinbreite reichenden Vorsprung 15, wobei die beiden Vorsprünge 15 um die halbe Steinbreite gegeneinander versetzt sind. Jeder dieser Vorsprünge 15 greift in eine Vertiefung 16 des Nachbarsteines ein.

Unter der Decke befinden sich zuweilen Anschlüsse oder Betätigungsorgane, zu denen ein Zugang möglich sein muß. Um einen solchen Zugang zu erreichen, wird im Rahmen der Erfindung ein Revisionsstein 17 eingesetzt. Dieser Revisionsstein 17 besitzt Sackbohrungen 18, in die Halter für die flexiblen Rohre 12 eingesetzt werden können. Der Revisionsstein 17 besitzt zwei durchgehende Leisten 19, mit denen er auf den daneben liegenden Steinen aufliegt und leicht nach oben abgehoben werden kann.

Es kann ferner ein Umlenkstein 20 vorgesehen sein, der Höcker 21 sowie quer verlaufende Führungen 22 besitzt.

Die Höcker 21 ermöglichen eine Schleifenbildung der flexiblen Rohre 12, die Führungen 22 eine Ablenkung der flexiblen Rohre 12 senkrecht zu ihrem bisherigen Verlauf. Um ein Herausspringen der flexiblen Rohre 12 zu verhindern, sind die Höcker mit hinterschnittenen Nuten 21' versehen.

In Fig. 4 sind beim Umlenkstein 20 die Mittellinien von eingelegten flexiblen Rohren eingezeichnet.

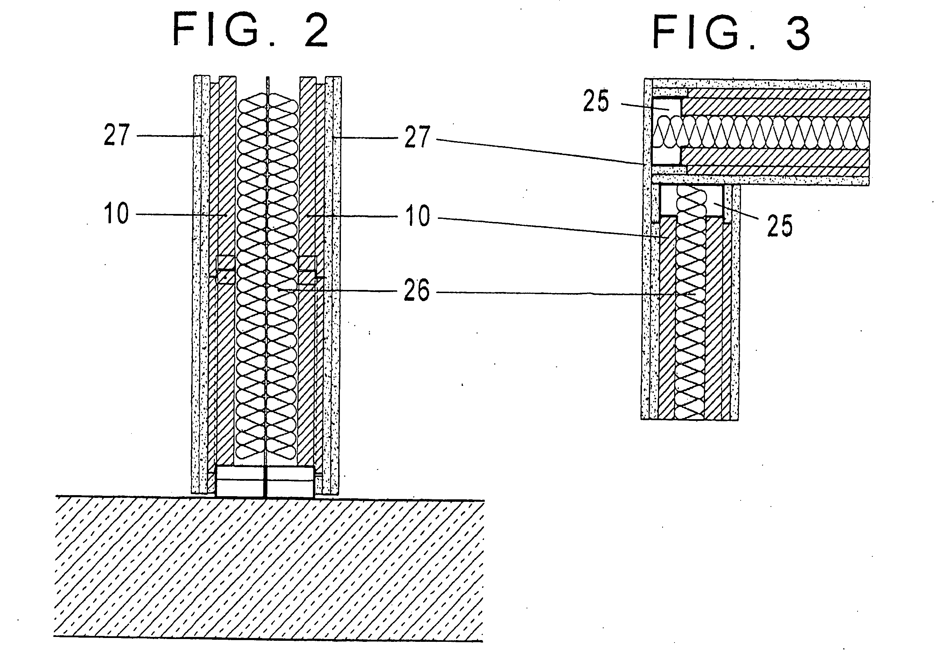

Die Fig. 2 und 3 stellen eine Metallständerwand dar. Die Ständer 25 sind in diesem Falle CW-Profile. Eine Mineralwolleinlage 26 ist in der Mitte der Wand angeordnet und anschließend befinden sich beidseitig die Steine 10 aus wärmespeicherndem Material. Gipskartonplatten 27 decken die Steine 10 an beiden Seiten der Wand ab.

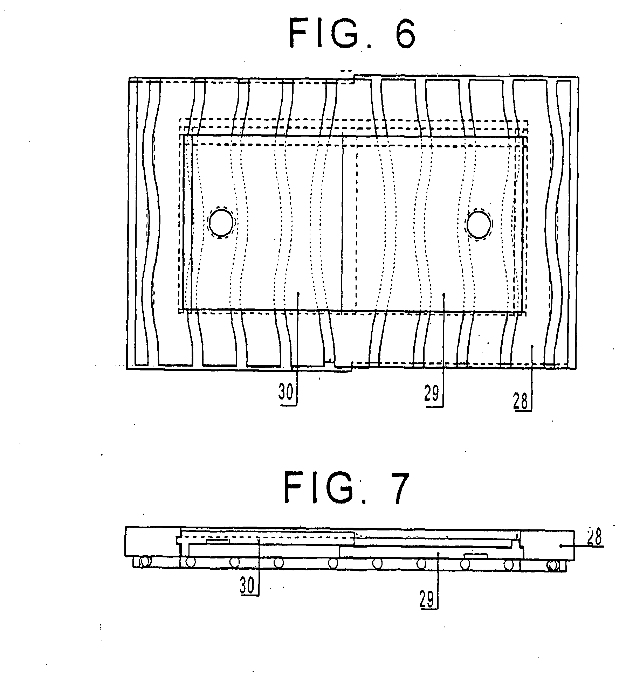

In den Fig. 6 und 7 ist ein Revisionsstein 28 für eine Wandkonstruktion dargestellt. Bei diesem Revisionsstein 28 sind zwei Schiebeelemente 29 und 30 vorgesehen, die gegeneinander verschiebbar sind und dadurch ein Zugang zu darunter liegenden Anschlüssen od. dgl. möglich ist.

## Patentansprüche

1. Wand- oder Deckenkonstruktion in Trockenbauweise, wobei an Ständern (25) oder Trägem (9) Gipskartonplatten (6, 6', 27) oder dergleichen befestigt sind und hinter den Gipskartonplatten (6, 6', 27) oder dergleichen Elemente (10) aus wärmespeichemdem Material angeordnet sind, wobei die Elemente aus wärmespeichemdem Material Steine (10) aus gebranntem Ton, aus Gips, aus Beton oder Kunststeine sind, **dadurch gekennzeichnet, dass** die Elemente (10) aus wärmespeicherndem Material Nuten (11) zum Einlegen von insbesondere flexiblen Rohren (12) für den Durchfluß eines Heiz- oder Kühlmediums aufweisen.

2. Wand- oder Deckenkonstruktion nach Anspruch 1, **dadurch gekennzeichnet, dass** die Steine (10) an ihren Begrenzungskanten je eine Stufe (13) besitzen, wobei die Höhe der Stufen (13) etwa der Tiefe der Nuten (11) entspricht.

3. Wand- oder Deckenkonstruktion nach Anspruch 1 oder 2, **dadurch gekennzeichnet, dass** ein Revisionsstein (17) um seine Mitte herumgeführte Sackbohrungen (18) zum Einlegen von insbesondere flexiblen Rohren (12) mittels Haltern aufweist.

4. Wand- oder Deckenkonstruktion nach einem der Ansprüche 1 bis 3, **dadurch gekennzeichnet, dass** ein Stein (20) Höcker (21) zum Umkehren von flexiblen Rohren (12) aufweist.

5. Wand- oder Deckenkonstruktion nach Anspruch 4, **dadurch gekennzeichnet, dass** die Höcker (21) hinterschnittene Nuten (21') zum Einlegen der flexiblen Rohre (12) aufweist.

6. Wand- oder Deckenkonstruktion nach einem der Ansprüche 1 bis 5, **dadurch gekennzeichnet, dass** ein Stein seitwärts gerichtete Führungen (22) zum Einlegen von flexiblen Rohren (12) aufweist.

7. Wand- oder Deckenkonstruktion nach einem der Ansprüche 1 bis 6, **dadurch gekennzeichnet, dass** ein Revisionsstein (28) mindestens eine Öffnung aufweist, die durch ein verschiebbares Element (29, 30) verschließbar ist.

## Claims

1. A wall or ceiling structure in a drywall design, wherein plasterboards (6, 6', 27) or the like are fastened to posts (25) or beams (9), and elements (10) consisting of heat-storing material are arranged behind the plasterboards (6, 6', 27) or the like, wherein the elements consisting of heat-storing material are bricks (10) consisting of burnt clay, plaster, concrete or artificial stone, **characterised in that** the elements (10) consisting of heat-storing materials have grooves (11) for inserting in particular flexible tubes (12) for a heating or cooling medium to flow through.

2. The wall or ceiling structure according to Claim 1, **characterised in that** the bricks (10) each have a step (13) at their boundary edges, wherein the height of the steps (13) corresponds approximately to the depth of the grooves (11).

3. The wall or ceiling structure according to Claim 1 or 2, **characterised in that** an inspection brick (17) has blind bores (18), which are guided around its centre, for inserting in particular flexible tubes (12) by means of holders.

4. The wall or ceiling structure according to any one of Claims 1 to 3, **characterised in that** a brick (20) has humps (21) for turning back flexible tubes (12).

5. The wall or ceiling structure according to Claim 4, **characterised in that** the humps (21) have undercut grooves (21') for inserting the flexible tubes (12).

6. The wall or ceiling structure according to any one of Claims 1 to 5, **characterised in that** a brick has laterally directed guides (22) for inserting flexible tubes (12).

7. The wall or ceiling structure according to any one of Claims 1 to 6, **characterised in that** an inspection brick (28) has at least one opening, which can be closed by a displaceable element (29, 30) .

## Revendications

1. Structure de mur ou de plafond en construction sèche, dans laquelle des panneaux de placoplâtre (6, 6', 27) ou similaires sont fixées sur des portants (25) ou des supports (9), et des éléments (10) constitués d'un matériau accumulant la chaleur sont agencés derrière les panneaux de placoplâtre (6, 6', 27) ou similaires, dans laquelle les éléments constitués d'un matériau accumulant la chaleur sont des pierres (10) à base de terre cuite, de plâtre, de béton ou encore des pierres artificielles, **caractérisée en ce que** les éléments (10) constitués d'un matériau accumulant la chaleur comportent des rainures (11) pour l'insertion de tuyaux (12), en particulier souples, pour le passage d'un liquide de chauffage ou de refroidissement.

2. Structure de mur ou de plafond selon la revendication 1, **caractérisée en ce que** les pierres (10) possèdent respectivement un gradin (13) au niveau de leurs bords de délimitation, dans laquelle la hauteur des gradins (13) correspond approximativement à la profondeur des rainures (11).

3. Structure de mur ou de plafond selon la revendication 1 ou 2, **caractérisée en ce qu'**une pierre de contrôle (17) comporte des perçages borgnes (18) autour de son centre, pour l'insertion de tuyaux (12), en particulier souples, au moyen d'appuis.

4. Structure de mur ou de plafond selon l'une des revendications 1 à 3, **caractérisée en ce qu'**une pierre (20) comporte des bossages (21) pour l'inversion de tuyaux souples (12).

5. Structure de mur ou de plafond selon la revendication 4, **caractérisée en ce que** les bossages (21) comportent des rainures contre-dépouillées (21') pour l'insertion des tuyaux souples (12).

6. Structure de mur ou de plafond selon l'une des revendications 1 à 5, **caractérisée en ce qu'**une pierre comporte des guidages (22) orientés vers le côté pour l'insertion de tuyaux souples (12).

7. Structure de mur ou de plafond selon l'une des revendications 1 à 6, **caractérisée en ce qu'**une pierre de contrôle (28) comporte au moins une ouverture apte à être refermée par un élément coulissant (29, 30).
